# EUROPEAN PATENT APPLICATION

(11) **EP 1 746 543 A1**
(43) Date of publication of application: **24.01.2007**
(21) Application number: 05737282.3
(22) Date of filing: 28.04.2005
(51) Int. Cl.: G07C 1/00

(54) **TIME RECORDER**

(30) Priority: 07.05.2004 JP 2004139203
(71) Applicant: MAX CO., LTD., Chuo-ku, Tokyo 103-8502 (JP)
(72) Inventor: OHASHI, Tsukasa MAX CO., Ltd., Chuo-ku, Tokyo 103-8502 (JP); SHIMIZU, Atsushi MAX CO., Ltd., Chuo-ku, Tokyo 103-8502 (JP)
(74) Representative: Samson & Partner
(86) International application number: PCT/JP2005/008206
(87) International publication number: WO 2005/109350

(57) **Abstract**

A time recorder is provided with a means for designating any day in a week or month as a special day different from other working days and a means for setting one or plural sets of special-day work starting times and special-day work finishing times, applied to the special day. In the special day, the special-day work starting times and special-day work finishing times thus set are applied. In the special day, since "being late" or "leaving work early" is judged on the basis of a special-day working time zone, any mark indicative of "being late" or "leaving work early" is not erroneously printed in the special day so that a printing result according to a working condition inclusive of the special day can be obtained.

## Description

### Technical Field:

This invention relates to a time recorder, and more particularly to a time recorder capable of dealing with a working system with different working time zones according to days of the week.

### Background Art:

There is a time recorder dealing with a shift working system consisting of a plurality of working time zones (for example, JP-A-08-190645). Some time recorders of this kind having a large set number of shifts can set several tens of working time zones. These time recorders can deal with working management for a large number of employees with various working time zones such as general employees, part-timers and temporary staffs.

In setting working time zones, selection of a shift number, setting of holidays, setting of a work starting time and a work finishing time, setting of an overtime starting time are carried out (further, as the case may be, start and end of an intermission starting and finishing times are set). By previously writing data in which an individual time card number and a shift number are correlated with each other, according to setting of the shift number, "being late" or "leaving work early" is judged, so that a "being late" mark, "leaving work early" mark and "holiday work" mark are printed when the time card is printed.

However, a conventional shift setting function cannot deal with a working system in which a special day of working days has a working time zone different from other week days. For example, there is a case where the working time of the week days other than Wednesday is 8:00 to 17:00 and that of Wednesday as the special day is 9:00 to 13:00. Although such a working system in which only the special day of the week has a different working time zone is common particularly in Europe, in the above case, the working time of the time recorder must be set for 8:00 to 17:00. In this case, in the special day, even if the employee comes to and leaves the office according to the rules, an inconvenience occurs that the "being late" or "leaving work early" will be marked.

A technique capable of dealing with the case where there is an irregular working day(s) in the unit of a week or month is proposed in the time recorder system disclosed in JP-A-04-010093. This time recorder system includes a time card with a working time system mark entry field for each day of the week and a time recorder having a function of reading the working time systemmark. Bypreviously entering the working time system mark for each day of the week on the time card, the time recorder judges the "being late" or "leaving work early" on the basis of the working time system (shift working) described on the time card, thereby executing the totaling processing.

In the above time recorder having the function of time totaling, as described above, in setting a weekly working schedule or a monthly working schedule, a different working time zone cannot be set for only the special day. Where the totaled data of the time recorder are fetched in a computer and processed along a working time totaling processing program, the "being late" or "leaving work early" in the irregular working day can be automatically corrected on the computer. However, on the side of the time recorder, even if the employee makes arrival at and departure from a job according to the working rules in the special day with a short working time, printing of the marks of the "being late" or "leaving work early" on the time printing field of that day cannot be avoided.

On the other hand, JP-A-04-010093 discloses a time recorder system in which the working time system mark for each day of the week is previously entered on the time card and the time recorder reads the mark thereby to judge "being late" or "leaving work early". This time recorder system can deal with the case where the working is shifted for each day. However, time and labor are taken to previously enter the working time system mark for each day of the week using a special time card, and mistakes of mark entry may also occur.

### Disclosure of the Invention

In view of the above circumstance, an object of one or more embodiments of this invention to provide a time recorder capable of dealing with a working system having a special day with a working time zone different from regular working days in a week or month without taking time and labor of entering the mark for each day of the week on a time card.

In one or more embodiments of this invention, the time recorder for printing a time on a time card inserted into a card inserting slot when the time card is inserted is provided with a means for designating any day in a week or month as a holiday; a means for setting one or plural sets of work starting times and work finishing times applied to the other days than the holiday; a printing control means for judging "being late" or "leaving work early" for the time card inserted on the basis of the work starting times and work finishing times thus set and in the case of "being late" or "leaving work early", printing a mark indicative of "being late" or "leaving work early" as well as the time when the time card has been inserted; a means for designating any day in a week or month as a special day different from other working days; and a means for setting one or plural set of special-day work starting times and special-day work finishing times, applied to the special day. In the special day, "being late" or "leaving work early" is judged on the basis of the special-day work starting times and special-day work finishing times thus set.

Further, in one or more embodiments of this invention, the time recorder is provided with a totaling mechanism for storing data printed on the time card and data of "being late" or "leaving work early".

The other features and effects are apparent from the description of embodiments and appended claims.

### Brief description of the drawings:

[Fig. 1] Fig. 1 is a block diagram of a time recorder.
[Fig. 2] Fig. 2 is a flowchart for setting a working time zone in the time recorder.

### Best Mode for Carrying Out the Invention:

Now referring to the drawings, an explanation will be given of one or more embodiments.

### <Embodiment 1>

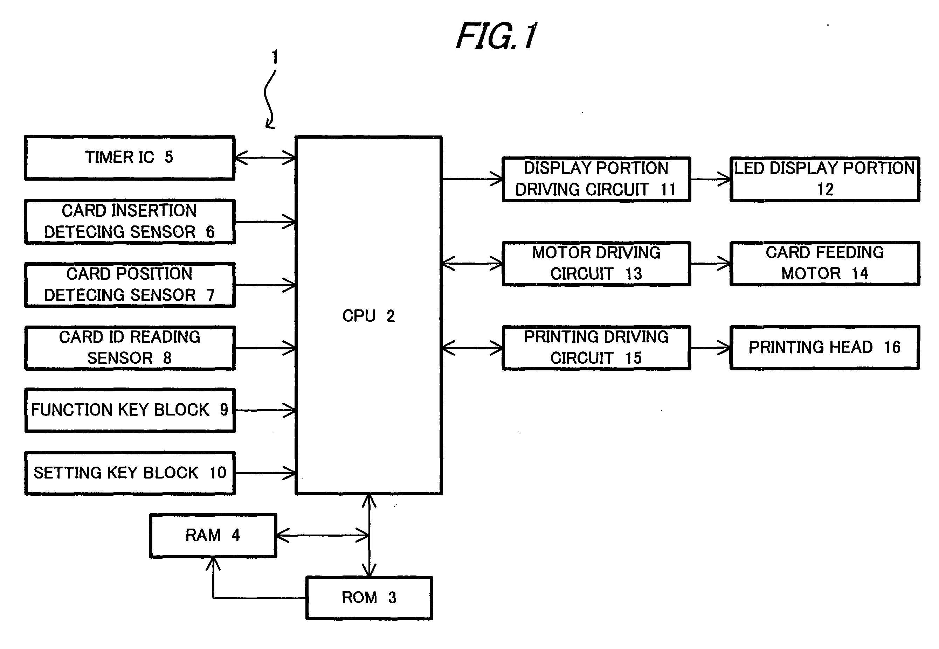

Fig. 1 shows an example of the configuration of a time recorder 1. Reference numeral 2 denotes a CPU; 3 a ROM for storing a time recorder control program; and 4 a RAM for storing data of the times of arrival at and departure from a job for each time card. The CPU 2 reads in time information from a timer IC 5, and drives a display portion driving circuit 11 to display the present time and date on an LED display portion 12. The CPU 2 is connected to a card insertion detecting sensor 6 such as a micro-switch or photo-interrupter; a card position detecting sensor 7 such as a rotary encoder for detecting the feeding quantity of a time card; a card ID reading sensor 8 designed as a photo-interrupter or a reflective photo-sensor; a function key block 9 composed of a plurality of MODE keys (not shown) for setting a setting mode; and a setting key block 10 composed of an UP key and a DOWN key for increasing/decreasing the value of the time and day of the week, a FORWARD key and BACKWARD key for moving a set step, and a plurality of setting keys (not shown) such as a CLEAR key and a SET key.

When the time card is inserted into a card inserting slot of the time recorder 1, the card insertion detecting sensor 6 turns ON. In response to the ON signal, the CPU 2 drives a motor driving circuit 13 to drive a card feeding motor 14, thereby pulling in the time card to a predetermined position. In the vicinity of the right end or left end of the time card, a plurality of punching holes or bar codes are arranged in a vertical line. The signal with a plurality of bits based on the plurality of punched holes and bar codes represents a card ID code which differs for each time card. The card ID reading sensor 8 operates in cooperation with the card position detecting sensor 7 and when the time card with the punched holes is pulled in, acquires the card ID code on the basis of the bit information detected by the light passed through the punched holes or the light reflected from the bar codes.

After having pulled in the time card to the predetermined position and read the card ID code, the CPU 2 inversely drives the card feeding motor 14 to raise the time recorder. The CPU 2, while monitoring the output signal from the card position detecting sensor 7, stops the card feeding motor 14 when the field of that day of the time card reaches the height position of a printing head 16. Then, the CPU 2 drives the printing head 16 through a printing driving circuit 15 to print the present time on the arrival or departure field of that day. Simultaneously, the CPU 2 writes the time data to be correlated with the card ID code in the RAM 4.

Next, an explanation will be given of the method for setting the working time zone of the time recorder 1. The conventional time recorder could not set a different working time zone for a day of the week. On the other hand, the time recorder according to this invention is characterized in that it stores, in the ROM 3, a setting program which permits the different working time zone to be set for the day of the week.

The procedure for setting a working time zone will be explained below. First, a key card on which a setting operation permission code is recorded is inserted in a time card inserting slot. Then, the key card is pulled therein and the setting operation permission code is read by the card ID reading sensor 8. Thus, the setting procedure enters a setting mode so that a symbol mark indicative of the setting mode is displayed on the LED display portion 12.

Next, any MODE key of the function key block 9 is depressed to select the setting mode. For example, a MODE 1 key serves to set a closing day and a totaling mode; a MODE 2 key serves to set a date and time; and a MODE 3 key serves to set a holiday and a working time zone. Now, the MODE 3 key is depressed to enter the MODE 3.

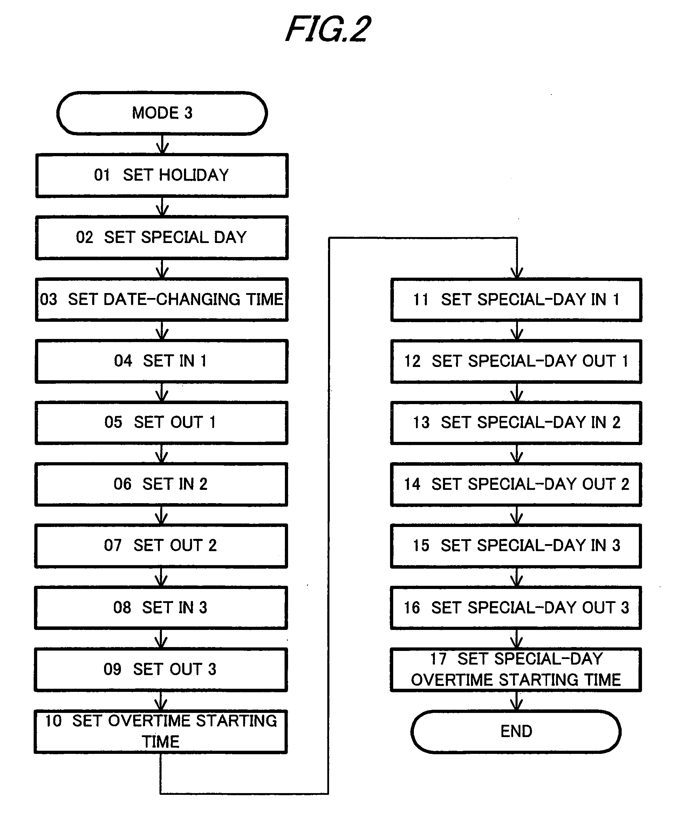

Fig. 2 is a flowchart for setting the MODE 3. The MODE 3 starts from a holiday setting step 01. Seven keys of IN1, OUT1, IN2, OUT2, IN3, OUT3 and * on the setting key block 10 correspond to seven days of the week. If any one of these keys is depressed, the corresponding day of the week is set as the holiday. If this key is depressed again, holiday setting is released. For example, if the keys of IN1 and * are depressed, Saturday and Sunday are set as the holiday so that display segments of Sunday (SUN) and Saturday (SAT) are lit. After the holiday setting, if a FORWARD key is depressed, the setting procedure proceeds a next special day setting step 02.

Now, as in the holiday setting, the day of the week is selected using the seven keys of IN1, OUT1, IN2, OUT2, IN3, OUT3 and *. If the OUT3 key is depressed, Friday is set as the special day. Thus, a different time setting from the other week days is applied to Friday.

If the FORWARD key is depressed after the special day setting, the setting procedure proceeds to a next date changing time setting step 03. Now, it is assumed that if an UP key is depressed once, the date changing time advances by one hour and a DOWN key is depressed once, the date changing time returns by one hour.

If the FORWARD key is depressed after the date changing time setting, the setting procedure proceeds to a subsequent work starting time IN1 registering step 04. The UP key or DOWN key is depressed to execute hour setting. The FORWARD key is further depressed to enter a minute setting mode. The UP key or DOWN key is depressed to execute minute setting. Upon completion of the work starting time IN1 setting, if the FORWARD key is depressed, the setting procedure proceeds to a work finishing time OUT1 registering step 05.

By the same key operation as in the work starting time IN1 setting step 04, the OUT 1 registering is executed. In the same manner, time settings are sequentially executed in steps 06, 07, 08 and 09 for IN2, OUT2, IN3 and OUT 3. Next, an overtime starting time is set in an overtime starting time registering step 10.

After the overtime starting time registering, if the FORWARD key is depressed, the time setting procedure proceeds to a work starting time IN1 registering step 11 for the special day. In the same manner as the above procedure of setting IN1, OUT1, IN2, OUT2, IN3 and OUT 3 for the above week days, for the special day, time settings are sequentially executed in steps 11, 12, 13, 14, 15 and 16 for IN1, OUT1, IN2, OUT2, IN3 and OUT 3. Further, in a special-day overtime starting time registering step 17, the overtime starting time is set for the special day.

In the specification destined for Europe, steps for setting dates for starting and finishing a summer time are added to the setting items described above. Upon completion of all the settings, if a SET key is depressed, the changed setting data are stored. It is needless to say that as regards the items not set and no changed, by depressing the FORWARD key, the corresponding steps are skipped. The following table 1 shows an example of working setting.

**[Table 1]**

| IN 1 | OUT 1 | IN 2 | OUT 2 | IN 3 | OUT 3 | OVERTIME STARTING TIME |
|---|---|---|---|---|---|---|
| 8:00 | 12:00 | 13:00 | 17:00 | 17:30 | 19:30 | 18:00 |
| SPECIAL DAY IN 1 | SPECIAL DAY OUT 1 | SPECIAL DAY IN 2 | SPECIAL DAY OUT 2 | SPECIAL DAY IN 3 | SPECIAL DAY OUT 3 | SPECIAL DAY OVERTIME STARTING TIME |
| 9:00 | 11:00 | 11:10 | 13:00 | --:-- | --:-- | 14:00 |

As described above, since two sets of working time settings each consisting of e.g. IN1, OUT1, IN2, OUT2, IN3 and OUT3 are be executed so that the respective working times can be set for the weekday and the special day, even in the working system including the day with a working time zone different from that in the weekday , "being late" and "leaving work early" are not erroneously recorded.

Incidentally, it is needless to say that this invention should not be limited to the embodiment descried above, but may be changed in various manners within the technical scope of this invention, and this invention covers the changed manners .

This application is based on Japanese Patent Application (Patent Application No. 2004-139203) filed on May 7, 2004, and the contents of which are incorporated herein by reference.

### Industrial Applicability:

The control unit of a time recorder includes a means for designating any day in a week or month as a special day different from other working days and a means for setting one or plural sets of special-day work starting times and special-day work finishing times, applied to said special day. In the special day, "being late" or "leaving work early" is judged on the basis of the special-day work starting times and special-day work finishing times, thereby making a time printing. By setting a holiday and the special day in the time recorder placed in a setting mode and setting different work starting times and work finishing times for the holiday and special day, respectively, in the special day, the special-day work starting times and special-day work finishing times are applied to make time printing and mark printing of "being late" or "leaving work early".

In the time recorder according to one or more embodiments of this invention, by previously designating, among working days in a week or month, a day with a working time zone different from other working days as a special day and setting the working time zone for the special day, the special-day working time zone is applied to judge "being late" or "leaving work early". For this reason, in the special day, any mark indicative of "being late" or "leaving work early" is not erroneously printed so that a printing result according to a working condition inclusive of the special day can be obtained.

## Claims

1. A time recorder for printing a time on a time card when the time card is inserted in the time recorder, comprising:
a means for designating arbitrary day in a week or month as a holiday;
a means for setting one or plural sets of work starting times and work finishing times applied to the other days than the holiday;
a printing control means for judging "being late" or "leaving work early" for the time card inserted on the basis of the work starting times and work finishing times thus set, and printing a mark indicative of "being late" or "leaving work early" as well as the time when the time card has been inserted in the case of "being late" or "leaving work early";
a means for designating any day in a week or month as a special day different from other working days;
a means for setting one or plural sets of special-day workstartingtimesandspecial-dayworkfinishingtimes, applied to said special day,
wherein said printing control means judges "being late" or "leaving work early" on the basis of the special-day work starting times and special-day work finishing times set in the special day.

2. The time recorder according to claim 1, further comprising:
a storage unit for storing time data printed on said time card and data of "being late" or "leaving work early".

3. The time recorder according to claim 1, further comprising:
a means for setting dates of starting and finishing a summer time.

4. A method of printing for a time card, comprising the steps of:
designating any day in a week or month as a holiday;
setting one or plural sets of work starting times and work finishing times applied to the other day than the holiday;
judging "being late" or "leaving work early" for the time card inserted on the basis of the work starting times and work finishing times thus set;
in the case of "being late" or "leavingwork early", printing a mark indicative of "being late" or "leaving work early" as well as the time when the time card has been inserted;
designating any day in a week or month as a special day different from other working days;
setting one or plural set of special-day work starting times and special-day work finishing times, applied to said special day; and
judging "being late" or "leaving work early" on the basis of the special-day work starting times and special-day work finishing times set in the special day.

5. The method for printing a time card according to claim 4, further comprising the step of storing time data printed on said time card and data of "being late" or "leaving work early".

6. The time recorder according to claim 4, further comprising the step of setting dates of starting and finishing a summer time.
